# EUROPÄISCHE PATENTANMELDUNG

(11) **EP 4 678 920 A2**
(43) Veröffentlichungstag der Anmeldung: **14.01.2026**
(21) Anmeldenummer: 25186620.8
(22) Anmeldetag: 01.07.2025
(51) Int. Cl.: F04C 18/16, B01D 45/00, C02F 1/00, C02F 1/20, F04C 29/02

(54) **VERSORGUNGSVORRICHTUNG**

(30) Priorität: 10.07.2024 DE 102024002243
(71) Anmelder: Hydac Filtertechnik GmbH, 66280 Sulzbach/Saar (DE)
(72) Erfinder: Schmitz, Andreas, 66459 Kirkel (DE); Nenno, Alexander, 66646 Marpingen (DE); Schneider, André Michael, 66119 Saarbrücken (DE); Morgens, Klaus, 54293 Trier (DE); Tassone, Marco, 66131 Saarbrücken-Ensheim (DE); Schöneberger, Alex Manfred, 66359 Bous (DE)
(74) Vertreter: Bartels und Partner, Patentanwälte

(57) **Zusammenfassung**

1. Versorgungsvorrichtung
2. Versorgungsvorrichtung zumindest bestehend aus einer Verdrängermaschine, insbesondere in Form eines Schraubenkompressors (10), die ein Gas, wie Wasserstoff, komprimiert, mit
- einem Fluid in Form von Prozesswasser, insbesondere in Form von deionisiertem Wasser,
- einer Kreislaufführung (18), die einen Vorratstank (20) und eine Hydropumpe (22) aufweist, die das Prozesswasser aus dem Vorratstank (20) entnimmt und im Zulauf (34) einer Niederdruckseite der Verdrängermaschine zwecks Versorgen derselben mit dem Prozesswasser zuführt, und
- einer Gasabscheideeinrichtung (40), die das auf der Hochdruckseite der Verdrängermaschine entnommene Prozesswasser vom Gas trennt.

## Beschreibung

Die Erfindung betrifft eine Versorgungsvorrichtung zum Versorgen einer Verdrängermaschine, insbesondere in Form eines Schraubenkompressors, die ein Gas komprimiert.

Durch DE 10 2012 222 747 A1 ist es bereits bekannt Zweischraubenkompressoren, beispielsweise zur Erzeugung von Druckluft, zu verwenden, bei denen jeweils zwischen zwei ineinandergreifenden schraubenartigen Rotoren und dem Kompressorgehäuse ein Kompressionsraum gebildet ist. Durch das Drehen der Rotoren verringert sich das eingeschlossene Volumen kontinuierlich, so dass die komprimierte Luft als Gas mit einem höheren Ausgangsdruck als dem Eingangsdruck durch einen Auslass aus dem Kompressorgehäuse herausgeführt ist. Dabei ist es notwendig Öl oder eine entsprechende für den Einsatzzweck geeignete Flüssigkeit, beispielsweise in Form von Wasser, in den Kompressionsraum mit einzuspritzen, da im Betrieb das Öl respektive das Wasser einerseits die Kompressionswärme absorbiert und andererseits die Flanken der Rotoren schmiert und abdichtet.

In diesem Zusammenhang ist aus wirtschaftlicher Sicht heraus zu beachten, dass mit zunehmender Einspritzmenge des Schmiermittels (Öl oder Wasser) der Energieverbrauch zunimmt, und dass ein optimaler Wirkungsgrad erst dann vorliegt, wenn eine minimale Menge von Schmiermittel eingespritzt wird. Minimal bedeutet in diesem Zusammenhang diejenige Flüssigkeitsmenge, die gerade noch genügt, um einen ausreichend dicken Schmiermittelfilm über die Lager des Kompressors zu legen, um diese ausreichend zu kühlen und Bewegungsspiele in Form von Leckagestellen zwischen den Rotoren respektive den Schrauben des Kompressors abzudichten.

In diesem Zusammenhang schlägt DE 10 2012 222 747 A1 einen Kompressor zum Erzeugen von Druckluft mit einem Ölabscheider zum Abscheiden von Öl aus einem komprimierten Luft-Öl-Gemisch vor, mit einem Einlass für das Luft-Öl-Gemisch, wobei vorzugsweise der Einlass in einer Rinne ausmündet, die in Richtung ihrer Rinnenoberseite derart gekrümmt ist, dass das Öl mittels Zentrifugalkraft in der Rinne abgeschieden werden kann. Neben zusätzlichen Mitteln zum teilweisen oder vollständigen Kühlen des Ölabscheiders ist des Weiteren eine Kühleinrichtung zum Kühlen und Entwässern der aus dem Ölabscheider kommenden komprimierten Luft vorgesehen. Dergestalt ist ein Kompressor mit einem Ölabscheider geschaffen, bei dem das abgeschiedene Öl temperaturbedingt weniger schnell altert und der mit einem geringen Energiebedarf betreibbar ist.

Ausgehend von diesem Stand der Technik liegt der Erfindung die Aufgabe zugrunde, diese und andere bekannte Lösungen dahingehend weiter zu verbessern, dass in einem weitgezogenen Rahmen das Komprimieren verschiedenster Arten von Gasen einschließlich Wasserstoff funktionssicher und kostengünstig ermöglicht ist.

Eine dahingehende Aufgabe löst eine Versorgungsvorrichtung mit den Merkmalen des Patentanspruches 1 in seiner Gesamtheit. Sollen spezielle Gase, wie Wasserstoff, komprimiert werden, kommt Öl als Prozessfluid respektive als Schmiermittel für die dahingehende Verdrängermaschine, wie einen Schraubenkompressor, regelmäßig nicht mehr in Frage, da das zu komprimierende Gas ansonsten von dem Öl verunreinigt wird und insoweit für spätere Anwendungen nicht mehr einsetzbar ist.

Demgemäß schlägt die Erfindung nach dem Patentanspruch 1 bei einer Versorgungsvorrichtung zum Versorgen einer Verdrängermaschine, insbesondere zur Wasserstoffkomprimierung, vor, Prozesswasser einzusetzen, insbesondere in Form von deionisiertem Wasser, das in einer Art Kreislaufführung aus einem Vorratstank entnommen mittels einer Druckversorgungseinrichtung, wie einer Hydropumpe, im Zulauf einer Niederdruckseite der Verdrängermaschine zugeführt ist und auf deren Hochdruckseite wiederum entnommen, im Rücklauf zum Vorratstank durch eine Gasabscheideeinrichtung geführt ist, die etwaig im Verdichtungsprozess eingetragenes Gas respektive Wasserstoffgas vom Prozesswasser trennt. Dank der zusätzlichen Gasabscheideeinrichtung braucht dann etwaig im Prozesswasser verbliebenes Gas nicht mehr im Vorratstank über einen längeren Zeitraum hinweg auszugasen, was ansonsten üblich ist, sondern die Gasabtrennung vom Prozesswasser erfolgt zeitnah und funktionssicher in der genannten Abscheideeinrichtung mit der Folge, dass der im Fluidfluss nachgeschaltete Vorratstank von seinem Aufnahmevolumen her dann deutlich kleiner ausfallen kann als bei bekannten Lösungen, da er eben nicht mehr für die Abscheidung von Gas benötigt wird, was ansonsten regelmäßig große, freiliegende (Wasser-)oberflächen und mithin groß aufbauende Tanks voraussetzt. Dies spielt insbesondere dann eine Rolle, wenn für den Vorratstank im Bereich von zugeordneten Maschinen und Anlagen nur wenig Einbauraum zur Verfügung steht und ferner kann dies eine Rolle spielen, wenn im Rahmen einer Wasserstoff- oder sonstigen Gasabscheidung aus Korrosionsschutzgründen heraus hochwertige Edelstahlmaterialien für den Vorratstank zum Einsatz kommen müssen, die in der Anschaffung einigermaßen teuer sind. Durch die mögliche Tankgrössenreduzierung durch Verwendung der Gasabscheideeinrichtung lassen sich insoweit dann in erheblichem Umfang Kosten einsparen.

Bei einer bevorzugten Ausführungsform der erfindungsgemäßen Versorgungsvorrichtung ist vorgesehen, dass im Zulauf zur Verdrängermaschine, die einen ein- oder mehrstufigen Verdichtungsprozess erlaubt, ausgehend von der Druckversorgungseinrichtung in Folge eine Kühleinrichtung und eine Filtereinrichtung, insbesondere zum Abreinigen von Partikelverschmutzung aus dem Prozesswasser, vorgesehen ist. Aufgrund der Kühleinrichtung lässt sich das Prozesswasser vor Eintrag in die Verdrängermaschine, insbesondere in Form des Schraubenkompressors, derart abkühlen, dass während der Gaskomprimierung entstehende Prozesswärme durch das Prozessfluid in Form des Wassers effizient aufgenommen und ausgetragen werden kann. Durch das Abreinigen von Partikelverschmutzung aus dem fluiden Prozesswasser durch die Filtereinrichtung erfolgt nicht ungewollt ein Schmutzeintrag auf die Eingangsseite der Verdrängermaschine, was zu deren lang andauerndem Betrieb mit beiträgt.

Bei einer weiteren bevorzugten Ausführungsform der erfindungsgemäßen Versorgungsvorrichtung ist vorgesehen, dass im Rücklauf von der Verdrängermaschine in Richtung der Gasabscheideeinrichtung eine Koaleszenzeinrichtung geschaltet ist, die kleintropfiges Prozesswasser respektive Wassermoleküle, auch in Form von Kondensat, zu volumetrisch größeren Wassertropfen agglomeriert. Die Koaleszenzeinrichtung lässt das von der Verdrängermaschine respektive dem Kompressor ausgangsseitig verdichtete Gas zur weiteren Verwendung in Richtung eines Abnehmers durch und trennt im Wesentlichen nur das Prozesswasser aus dem Gasstrom ab, das regelmäßig noch mit Gasbestandteilen, wie Wasserstoffgas, versehen ist.

Bei einer weiteren bevorzugten Ausführungsform der erfindungsgemäßen Versorgungsvorrichtung ist vorgesehen, dass die Kreislaufführung für das Prozesswasser geschlossen ausgeführt ist, um dergestalt eine ungestörte Prozesswasserführung für die jeweilige Verdrängungsmaschine sowohl auf deren Eingangsseite als auch auf deren Ausgangsseite mit dem komprimierten Gas zu erreichen, was im Hinblick auf die hierfür benötigte Pumpenleistung energetisch günstig ist.

Bei einer weiteren bevorzugten Ausführungsform der erfindungsgemäßen Versorgungsvorrichtung ist vorgesehen, dass die Gasabscheideeinrichtung mindestens
- einen Entlüfter,
- einen Zentrifugal- oder Fliehkraftabscheider, vorzugsweise in Verbindung mit einem Filterelement aus Polyethylen,
- einen Gaswäscher, oder
- einen Filter
aufweist. Sofern hier die Gasabscheidung mittels eines Filters angesprochen ist, meint dies in der Terminologie des vorliegenden Schutzrechtsgegenstandes, dass mit Filtermaterialien, wie sie grundsätzlich auch für eine Partikelabscheidung aus einem Fluidstrom eingesetzt werden, diesmal keine oder keine nennenswerte Partikelabscheidung stattfindet, sondern dass vielmehr die Filtermaterialien in entsprechender Anpassung vorrangig der Abscheidung mindestens eines Gases aus einem Fluidstrom dienen, der im vorliegenden Fall aus Prozesswasser, wie deionisiertes Wasser, gebildet ist.

Gegenstand der Erfindung ist auch ein dahingehender Filter zur Behandlung von Prozesswasser für eine Versorgungsvorrichtung, wie vorstehend vorgestellt, mit einem ersten Filterelement und mit einem zweiten Filterelement, das das erste Filterelement unter Bildung eines Strömungsraumes mit einem vorgebbaren radialen Abstand umfasst, wobei jedes Filterelement ein Filtermedium aufweist, das von dem Prozesswasser in einer vorgebbaren Durchströmungsrichtung durchströmbar ist, und wobei die beiden Filterelemente in Hintereinanderanordnung jeweils eine Entgasungsstufe ausbilden, die der Vergrößerung von Gasblasen durch Koaleszenz und dem Entfernen derselben aus dem Prozesswasser durch auftriebsbedingtes Abscheiden dient. Dergestalt ist in einer handelbaren Baueinheit zusammengefasst ein zweistufiger Entgasungsfilter geschaffen, der die Trennung des Prozesswassers vom Gas gegenüber bekannten Lösungen, wie Entlüftern, Zentrifugal- oder Fliehkraftabscheidern sowie Gaswäscheeinrichtungen, stark verbessert.

Bei einer bevorzugten Ausführungsform des erfindungsgemäßen Filters ist vorgesehen, dass das eine in Durchströmungsrichtung gesehen jeweils vorangehende Filtermedium aus einer Tiefenfilterkerze besteht, die zur Erhöhung des Filtervolumens als hohlzylindrischer Filtermantel konzipiert ist. Derart ergibt sich eine koaxiale Anordnung von zwei Filterstufen, die der Entgasung des Prozesswassers dienen, wobei die erste Filterstufe zu einer ersten Koaleszenz der Gasblasen führt, die dann vom Volumen her entsprechend vergrößert auftriebsbedingt nach oben steigen und aus dem Prozesswasser sich dergestalt selbständig abtrennen. Die bis dahin noch nicht abgeschiedenen Gasblasen werden dann von der zweiten Entgasungsstufe zurückgehalten und wiederum einem Koaleszenzvorgang zugeführt, so dass die insoweit auch im Prozesswasser fein dispergierten Gasblasen sich vom Volumen her vergrößern, dabei jeweils auftriebsbedingt aufsteigen, um dann ebenfalls dergestalt vom Prozesswasser abgeschieden zu werden. Dergestalt lässt sich das Prozesswasser in funktionssicherer Weise von Gasbestandteilen, wie Wasserstoff, separieren.

Das Prozesswasser gelangt dann im Rahmen der Kreislaufführung im Rücklauf zurück in den Vorratstank, der volumetrisch deutlich kleiner ausfallen kann, weil der Vorratstank nicht mehr für die Gasabscheidung benötigt wird, die ja in einer vorangegangenen Stufe mittels der Gasabscheideeinrichtung bereits durchgeführt worden ist. Da bei Wasserstoffanwendungen regelmäßig für den Vorratstank Edelstahl zum Einsatz kommt, ist insoweit für einen kleineren Tank auch die Einsatzmenge von Edelstahl für die Tankherstellung reduziert, was Kosten sparen hilft.

Bei einer weiteren bevorzugten Ausführungsform ist vorgesehen, dass zur Bildung der Tiefenfilterkerze Meltblownfasern verwendet sind, die vorzugsweise auf einen fluiddurchlässigen Stützkörper aufgespritzt sind, an dem der Filtermantel sich entlang seiner Innenumfangsseite abstützt. Die hier bevorzugt zum Einsatz kommende Tiefenfilterkerze ist gegenüber einem plissierten Elementmaterial ausgesprochen voluminös konzipiert, was ein verbessertes Gasaustragverhalten mit sich bringt. Insoweit bildet die Meltblown-Tiefenfilterkerze einen hohlzylindrischen massiven Mantelblock mit vorgebbarer Porosität, vergleichbar einem Schaum, für die Gasabscheidung aus.

Anstelle des Aufbaus der Tiefenfilterkerze aus Meltblownfasern besteht auch die Möglichkeit diese aus einem Sintermaterial aufzubauen, sei es in Form eines Sintermetallfilters, sei es in Form eines Keramikfilters mit jeweils vorgebbarer Filterdurchlässigkeit.

In Durchströmungsrichtung gesehen kann ferner das in der jeweiligen Durchströmungsrichtung zuvorderst angeordnete Filterelement zumindest teilweise auch aus Edelstahl-Filtermaterialien aufgebaut sein, welche bevorzugt in plissierter Form das jeweilige Filtermedium für die Gasabscheidung bilden.

Für verlässliche Entgasungsvorgänge bei hoher Trennrate hat es sich als vorteilhaft erwiesen, die Filterfeinheit der Tiefenfilterkerze zwischen 10 µm und 200 µm zu wählen. Kommen für die Tiefenfilterkerze verstärkt oder ausschließlich Meltblownfasern zum Einsatz, liegt bevorzugt der Faserdurchmesser zwischen 0,1 µm bis 2000 µm, und der mittlere durchflusswirksame Porendurchmesser (MFP/Mean Flow Pore Size) beträgt vorzugsweise zwischen 1 µm bis 2000 µm. Bei Verwendung von Edelstahlmaterialien für das jeweilige Filtermedium haben sich Porengrößen zwischen 20 µm bis 40 µm als besonders geeignet erwiesen.

Bei einer weiteren bevorzugten Ausführungsform des erfindungsgemäßen Filters ist vorgesehen, dass für einen sortenreinen Aufbau alle eingesetzten Komponenten des Filters, wie Filtermedien, Endkappen und Stützkörper aus ein- und demselben Kunststoffmaterial bestehen, vorzugsweise aus Polypropylen. Die dahingehenden Materialien lassen sich umweltverträglich entsorgen, was regelmäßig notwendig wird, wenn ein verbrauchter Filter gegen einen Neufilter zu tauschen ist. Dergestalt lässt sich der verbrauchte Filter auch als Ganzes einäschern respektive verbrennen. Neben dem angesprochenen Polypropylen lässt sich der Filter auch aus weiteren Kunststoffmaterialien aufbauen, wie beispielsweise PEK, PEEK, PPS oder PES.

Eine Versorgungsvorrichtung nebst einem Filter, wie vorstehend vorgestellt, dient dem Separieren von eingetragenem Gas, wie Wasserstoff, aus einem vorzugsweise im geschlossenen Kreislauf geführten Prozesswasserstrom zwecks Verringern des Tankvolumens eines Vorratstanks, in dem das Prozesswasser zeitweise bevorratet an einem Zulauf einer Verdrängermaschine, wie eines Schraubenkompressors, abgegeben wird im Rahmen des Durchführens einer Wasserstoffverdichtung. Neben einer einstufigen Verdichtung mittels eines einzelnen Schraubenkompressors ist auch eine mehrstufige Verdichtung mittels mehrerer Schraubenkompressoren möglich oder mit nur einem Schraubenkompressor, der mehrere Verdichtungsstufen aufweist.

Im Folgenden wird die erfindungsgemäße Versorgungsvorrichtung nebst Filter als Gasabscheideeinrichtung anhand eines Ausführungsbeispiels näher erläutert. Dabei zeigen in prinzipieller und nicht maßstäblicher Darstellung die
- Figur 1: in der Art eines hydraulischen Schaltplans den wesentlichen Aufbau einer für einen Kompressor vorgesehenen Kreislaufführung mit Prozesswasser;
- Figuren 2 und 3: im Längsschnitt gesehen eine perspektivische Ansicht auf einen Filter, wie er in der Kreislaufführung nach Figur 1 im Rahmen der Gasabscheidung Verwendung findet, betreffend seinen oberen bzw. unteren Teil; und
- Figur 4: die Einbausituation von Filtern nach den Figuren 2 und 3 in einem behälterartigen Vorratstank, wie in Figur 1 exemplarisch aufgezeigt.

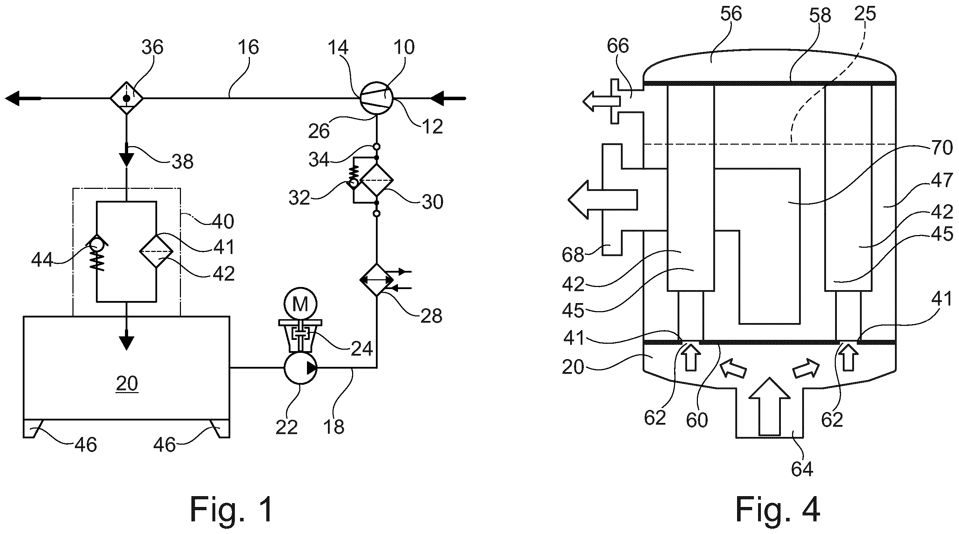

Figur 1 zeigt als Ganzes eine Versorgungsvorrichtung zum Versorgen einer Verdrängermaschine, insbesondere in Form eines Kompressors, wie eines Schraubenkompressors 10, die ein Gas, insbesondere in Form von Wasserstoff komprimiert. Hierfür weist die Verdrängermaschine respektive der Schraubenkompressor 10 einen Eingang 12 für Wasserstoff im Niederdruckbereich auf. Am Ausgang 14 des Kompressors 10 wird wiederum verdichteter Wasserstoff unter Hochdruck in eine Abgabeleitung 16 abgegeben. Die dahingehende Durchströmungsrichtung mit Wasserstoff ist in Figur 1 mit Pfeilen vor und hinter dem Kompressor 10 wiedergegeben. Ferner wird in einer Kreislaufführung 18, wozu die Abgabeleitung 16 mitzählt, Prozesswasser, insbesondere in Form von deionisiertem Wasser, aus einem Vorratstank 20 entnommen unter Einsatz einer Druckversorgungseinrichtung, wie einer üblichen Hydropumpe 22, die über eine Getriebestufe 24 von einem Elektromotor M antreibbar ist. Die Hydropumpe 22 pumpt dabei aus dem Vorratstank 20 das Prozesswasser ausgangsseitig in Richtung des Schraubenkompressors 10.

Zwischen der Hydropumpe 22 und einem Einlass 26 an dem Kompressor 10 zwecks Einspritzen des Prozesswassers in den Kompressor 10 ist eine Kühleinrichtung 28 sowie eine Filtereinrichtung 30 geschaltet. Die Kühleinrichtung 28 in der Art eines üblichen Wärmetauschers dient dem Abführen von Prozesswärme aus dem Prozessfluid wie sie im Rahmen der Kompression für das Wasserstoffgas entsteht. Demgegenüber dient die Filtereinrichtung 30 dem Abreinigen des Prozesswassers von partikulärer Verschmutzung, wobei bei verblocktem Filterelement der Filtereinrichtung 30 ein federbelastetes Rückschlagventil 32, das in Richtung eines Zulaufes 34 zum Kompressor 10 öffnet, den Fluidweg von der Kühleinrichtung 28 zum Kompressor 10 hin frei gibt. Der dahingehende Zulauf 34, der am Einlass 26 des Kompressors 10 ausmündet, erlaubt die Zuführung des Prozesswassers auf die Niederdruckseite der Verdrängermaschine in Form des Kompressors 10. Auf der Hochdruckseite des Kompressors 10, an dem der Ausgang 14 angeschlossen ist, wird unter Hochdruck Wasserstoffgas und Wasser in die Abgabeleitung 16 eingebracht.

Die dahingehende Abgabeleitung 16 mündet in Blickrichtung auf die Figur 1 gesehen an ihrer linken Seite in eine Koaleszenzeinrichtung 36 aus, die Wasserstoff unter Hochdruck an einen Abnehmer respektive Wasserstoffverbraucher durchlässt, der sich in Blickrichtung auf die Figur 1 gesehen an dem linken Pfeil ausgangsseitig der Koaleszenzeinrichtung 36 anschließt und nicht dargestellt ist. Ausgangsseitig der Koalezenzeinrichtung 36 und im Rücklauf 38 zum Vorratstank 20, was wiederum mit einem Pfeil angedeutet ist, ist eine Gasabscheideeinrichtung 40 angeordnet, die etwaig im Verdichtungsprozess eingetragenes Gas respektive Wasserstoffgas vom Prozesswasser trennt, wobei sowohl Wasser in koalisierter Form als auch Restgas vonseiten der Koaleszenzeinrichtung 36 in den Rücklauf 38 im Betrieb der Versorgungsvorrichtung abgegeben wird. Insoweit ist gemäß der Darstellung nach der Figur 1 die Kreislaufführung 18 für das Prozesswasser geschlossen ausgeführt.

Die Gasabscheideeinrichtung 40 weist mindestens eine Abscheidefilter 42 auf, der wiederum ein federbelastetes Rückschlag- oder Bypassventil 44 aufweist, das in Fluidrichtung gesehen zum Vorratstank 20 hin öffnet und bei verblocktem Filter 42 die weitere Fluidzufuhr im Rücklauf 38 von der Koaleszenzeinrichtung 36 in Richtung des Vorratstankes 20 sicherstellt. Die Hydropumpe 22 ist eingangsseitig an den Fluid-Vorratstank 20 angeschlossen, der über Füße 46 auf einem Hallenboden oder dergleichen (nicht dargestellt) aufständerbar ist zwecks thermischer Entkopplung von der Umgebung.

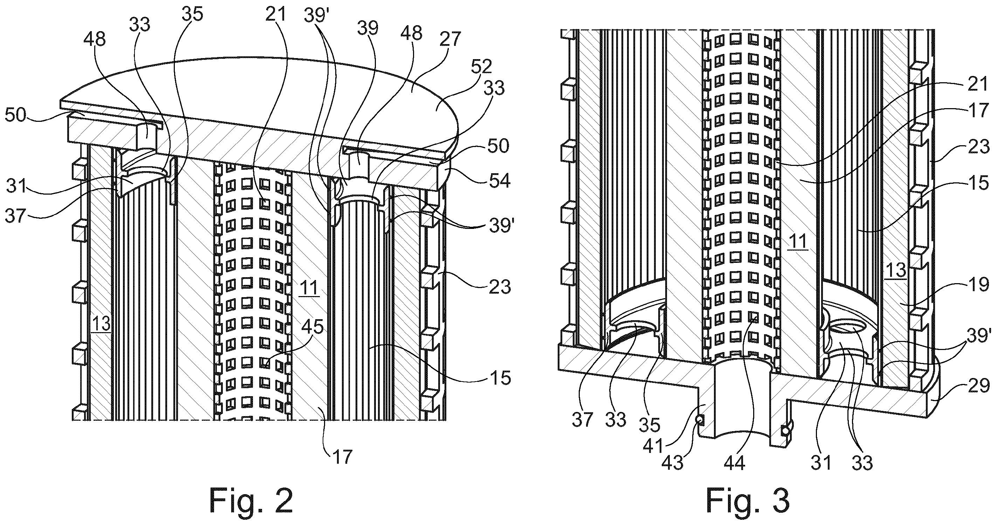

Der Filter 42 ist in den Figuren 2 und 3 näher dargestellt, wobei die Figur 2 die sogenannte Kopfseite des Filters 42 wiedergibt und die Figur 3 die sogenannte Fußseite desselben. Es versteht sich, dass zwischen der Kopfseite nach der Figur 2 und der Fußseite nach der Figur 3 sich der Filter 42 mit seinen Einzelkomponenten in axialer Richtung gesehen mehr oder minder beliebig verlängern lässt. Der Filter 42 weist in einer Baueinheit zusammengefasst ein erstes Filterelement 11 sowie ein zweites Filterelement 13 auf, das das erste Filterelement 11 unter Bildung eines Strömungsraumes 15 mit einem vorgebbaren radialen Abstand umfasst. Sofern hier von Filterelementen 11, 13 die Rede ist, ist hier das Abfiltrieren respektive das Abscheiden von Gas aus einem Fluid, wie Wasser, angesprochen und nicht die sonst für Filter vorgesehene partikuläre Abreinigung eines dahingehenden Fluidstroms; auch wenn die hier eingesetzten Filter 11, 13 zumindest in geringem Umfang eine solche Abreinigung von partikulärer Verschmutzung gleichfalls vornehmen können.

Weiter ist vorgesehen, dass das erste Filterelement 11 ein erstes Filtermedium 17 aufweist und das zweite Filterelement 13 ein zweites Filtermedium 19. Das erste Filtermedium 17 stützt sich an einem fluiddurchlässigen Stützkörper 21 in Form eines Stützgitters innenumfangsseitig ab. Das zweite Filtermedium 19 ist außenumfangsseitig wiederum von einem weiteren fluiddurchlässigen Stützkörper 23 umfasst, der ebenfalls in der Art eines Stützgitters ausgebildet ist. Weitere nicht dargestellte, fluiddurchlässige Stützkörper können im Bedarfsfall auf der Außenumfangsseite des ersten Filtermediums 17 angeordnet sein sowie auf der Innenumfangsseite des zweiten Filtermediums 19. Im vorliegenden Fall findet eine Durchströmung des Filters 42 in Durchströmungsrichtung gesehen von innen nach außen statt, was in der Figur 4 mit Pfeilen wiedergegeben ist.

Das erste Filtermedium 17 ist zusammen mit seinem inneren Stützkörper 21 zwischen einer oberen Endkappe 27 und einer unteren Endkappe 29 aufgenommen. Zwischen denselben beiden Endkappen 27, 29 und mit entsprechend gleicher axialer Baulänge ist das zweite Filtermedium 19 mit dem weiteren Stützkörper 23 aufgenommen. Insoweit sind die jeweils stirnseitigen Enden von erstem und zweitem Filterelement 17, 19 sowie die beiden Stützkörper 21, 23, vorzugsweise unter Einsatz eines sogenanntes Spiegelschweißverfahrens, mit den Endkappen 27, 29 fest und fluiddicht verbunden. In Durchströmungsrichtung von innen nach außen gesehen, bildet das eine erste Filtermedium 17 eine erste Entgasungsstufe aus, die der Vergrößerung von Gasblasen durch Koaleszenz und dem Entfernen derselben aus dem Prozessfluid durch auftriebsbedingtes Abscheiden dient. Das nachfolgende weitere Filtermedium 19 bildet eine zweite Entgasungsstufe aus, die dem Entfernen von im Prozessfluid verbleibenden, feinst verteilten Gas- oder Wasserstoffblasen wiederum durch Koaleszenz und dem Abscheiden derselben durch auftriebsbedingtes Aufsteigen dient. Die insoweit durch das erste Filterelement 11 als Ganzes gebildete erste Entgasungsstufe dient also der Vergrößerung von vorhandenen Gasblasen, die dann im Prozessfluid in Form von Prozesswasser aufsteigen und dergestalt an der Oberfläche 25 des Prozessfluides abgeschieden werden, was anhand des Behälters oder Vorratstanks 20 nach der Figur 4 noch näher erläutert werden wird. Das zweite Filterelement 13, das insoweit die zweite Entgasungsstufe bildet, dient jedenfalls insoweit der Nachseparation der verbliebenen, feinst verteilten Gasblasen im Prozesswasser durch Koaleszenz zu größeren Blasenanordnungen und Abscheiden durch auftriebsbedingtes Aufsteigen im Vorratstank 20.

Bei einer Ausführungsform des erfindungsgemäßen Filters 42 besteht die innere Filterstufe in Form des ersten Filterelementes 11 aus einer voluminösen Meltblown-Tiefenfilterkerze aus Polypropylen. Die Filterfeinheit der Tiefenfilterkerze liegt bevorzugt zwischen 10 µm und 200 µm; ersatzweise kann hier auch ein nicht näher dargestellter Sinterfilter mit vergleichbarer Filterfeinheit zum Einsatz kommen. Vorzugsweise werden zum Herstellen der Tiefenfilterkerze aus Meltblownfasern diese auf den inneren Stützkörper 21 aufgespritzt. Die äußere Filterstufe mit dem zweiten Filtermedium 19 besteht bevorzugt aus einem dreilagigen plissierten Aufbau aus Polypropylen-Gewebe. Vorzugsweise liegt dabei die Maschenweite der beiden äußeren Lagen, die dem Stützkörper 23 zugewandt sind, bei etwa 200 µm bis 1000 µm, was relativ grob ist. Demgegenüber liegt die Maschenweite der nachfolgenden inneren Lage bei 0,1 µm bis 500 µm, was als relativ fein bezeichnet werden kann. Die Faltendichte der plissierten Filtermatte, die insoweit das zweite Filtermedium 19 ausbildet, liegt bevorzugt bei 0,1 bis 6 Falten pro Zentimeter Filterfläche.

Für das bereits angesprochene Spiegelschweißverfahren werden im Bereich der oberen Endkappe 27 als auch im Bereich der unteren Endkappe 29 in den Strömungsraum 15 zwei gleich ausgebildete Zentrierringe 31 eingesetzt, die mit Durchgangslöchern 33 versehen sind. Der in Blickrichtung auf die Figur 2 gesehen obere Zentrierring 31 ist mit seiner oberen freien Stirnseite wiederum mittels Spiegelschweißens an der oberen Endkappe 27 festgelegt und die in dem Zentrierring 31 eingebrachten Durchgangslöcher 33 dienen dem Durchgang von aufsteigenden Gasblasen aus dem Strömungsraum 15 zwischen den beiden Filtermedien 17, 19. Ebenso ist der in Blickrichtung auf die Figur 3 gesehen untere Zentrierring 31 mit seiner unteren freien Stirnseite mit der unteren Endkappe 29 spiegelverschweißt. Hierfür weist der jeweilige Zentrierring 31 innenumfangsseitig einen ringförmigen Festlegesteg 35 auf; ebenso vergleichbar außenumfangsseitig einen ringförmigen Festlegesteg 37. Die dahingehenden vertikalen Stege 35, 37 nehmen in etwa mittig zwischen sich einen horizontalen Bodenabschnitt 39 des jeweiligen Zentrierringes 31 auf, in dem die Durchgangslöcher 33 eingebracht sind. Die Durchgangslöcher 33 erstrecken sich in diskreten Abständen voneinander entlang des Bodenabschnittes 39, der parallel zu der Ausrichtung der Endkappen 27, 29 verläuft. Nach außen hin stützt sich der jeweilige Festlegesteg 35, 37 an oberen und unteren Teilen des Außenumfanges des ersten Filtermediums 17 beziehungsweise am Innenumfang des zweiten Filtermediums 19 ab. Die beiden Zentrierringe 31 sind der Einfachheit halber gleich ausgebildet, wobei der in Blickrichtung auf die Figur 3 gesehen untere Zentrierring 31 nicht zwingend die Durchgangslöcher 33 für den Abtransport von Gasblasen aufweisen muss. Anstelle des angesprochenen Spiegelschweißverfahrens können hier auch andere Verbindungsverfahren einschließlich dem Herstellen von Klebstoffverbindungen zur Anwendung kommen. Die beiden Stege 35, 37 weisen jeweils nach außen hin in Richtung der Filtermedien 17, 19 Paare von vorspringenden Zentrierstegen 39' auf, die in die flexible nachgiebigen Filtermedien 17, 19 zumindest teilweise eindringen können, um insoweit die Positionierung der jeweiligen Stege für den Schweißvorgang innerhalb des Filters 42 zu erleichtern respektive zu ermöglichen.

Wie sich insbesondere aus der Figur 3 ergibt, weist die untere Endkappe 29 einen in Blickrichtung gesehen nach unten hin vorspringenden hohlzylindrischen Ringstutzen 41 auf mit einer Dichteinrichtung 43 in Form eines elastomeren O-Dichtrings, der in einer Außenumfangsnut im Ringstutzen 41 aufgenommen ist. Dergestalt lässt sich der Filter 42 als Ganzes in einem Behältergehäuse als Vorratstank 20 nach der prinzipiellen Darstellung in der Figur 4 zur Umgebung hin abgedichtet festlegen und die Zufuhr des wasserstoffhaltigen Prozesswassers kann über den hohlen Durchgangskanal des Ringstutzens 41 auf die zentrale Innenseite 45 des Filters 42 erfolgen, die als Einströmraum konzipiert nächstliegend von dem Stützkörper 21 nebst erstem Filtermedium 17 umfasst ist. Von dieser Innenseite 45 aus gelangt das Prozesswasser entlang der Durchströmungsrichtung nach Passieren des ersten Filterelementes 11 in den Strömungsraum 15 und von dort aus gesehen über das zweite Filterelement 13 mit dem nachfolgenden weiteren Stützkörper 23 auf die Außenseite 47 des Filters 42, die dem Inneren des Vorratstanks 20 im Rahmen einer Behälter- oder Tankaufnahme für den jeweiligen Filter 42 entspricht und noch anhand der Figur 4 näher erläutert werden wird.

Die obere Endkappe 27 gemäß der Darstellung nach der Figur 2 weist koaxial zu der Ausrichtung der oberen Durchgangslöcher 33 im Zentrierring 31 Auslassöffnungen 48 auf, die mit ihrem einen freien Ende in den Strömungsraum 15 oberhalb des Zentrierringes 31 ausmünden und mit ihrem anderen freien Ende in mindestens einen Ringspalt 50, der ausgehend von der Innenseite der insoweit geschlossenen oberen Endkappe 27 auf die Außenseite 47 des Filters 42 ausmündet. Zur Bildung des umlaufenden Ringspaltes 50 ist ein oberer Kappenbereich 52 von einem unteren Endkappenbereich 54 der oberen Endkappe 27 unter Bilden eines radialen nach außen vorspringenden Absatzes abgetrennt. Anstelle eines gemeinsamen Ringspaltes 50 für alle Auslassöffnungen 48 im Deckelbereich der Endkappe 27 kann aber auch jede Auslassöffnung 48 über einen eigenen Strömungskanal (nicht dargestellt) mit der Außenseite 47 des Filters 42 verbunden sein. Ferner hat es sich als günstig erwiesen den jeweiligen Strömungskanal relativ eng auszuführen und der freie Durchmesser der Auslassöffnungen 48 ist kleiner gewählt als der freie Durchmesser der Durchgangslöcher 33 im Zentrierring 31. In jedem Fall gelangen dergestalt im Strömungsraum 15 aufsteigende Gasblasen aus Wasserstoff über die Durchgangslöcher 33 im oberen Zentrierring 31 und über die Auslassöffnungen 48 in die einzelnen Strömungskanäle oder über den genannten Ringspalt 50 der oberen Endkappe 27 nach außen, um dergestalt sie aus dem Prozesswasser und mithin aus dem Filter 42 zur Umgebung hin in Form der Filteraußenseite 47 abführen zu können.

Wie die Figur 4 prinzipiell zeigt, sind insgesamt zwei Filter 42 wie vorstehend beschrieben in das Gehäuse des Vorrichtungstanks 20 eingesetzt, mit einem vom Vorratstank 20 abnehmbaren Deckelteil 56 zwecks Entnahme verbrauchter Filter 42 und deren Tausch gegen Neuelemente. In Figur 4 sind nur zwei Filter 42 gezeigt, es können aber auch mehr, beispielsweise sechs Filter 42 aufgenommen werden, die sich diametral zur Längs- oder Hochachse des Tanks 20 einander gegenüberliegend mit gleichen Abständen im Tank 20 gruppieren. Das Deckelteil 56 ist mit einem Niederhalter 58 versehen, um die einzelnen Filter 42 als Baueinheit in Position zu halten. Hierfür drückt bei geschlossenem Deckelteil 56 der Niederhalter 58 von oben her die einzelnen Filter 42 über ihren jeweiligen Ringstutzen 41 auf eine Trenn- oder Adapterplatte 60 mit entsprechend zugehörig konzipierten Ringausnehmungen 62. Der Vorratstank 20 respektive der Behälter weist darüber hinaus bodenseitig einen Eingang 64 für wasserstoffhaltiges Prozesswasser auf sowie randseitig einen Ausgang 66 für das im Vorratstank 20 abgeschiedene Wasserstoffgas und einen weiteren Ausgang 68 für das von dem Wasserstoffgas befreite Prozesswasser, wobei der jeweilige Filter 42 ausgehend von dem Eingang 64 des Vorratstanks 20 von innen nach außen durchströmt ist. Das abgeschiedene Wasserstoffgas wird oberhalb des Fluidlevels 25 im Vorratstank 20 an den einen Ausgang 66 im Behälter respektive Tank 20 weitergeleitet, von wo aus es in Richtung eines wasserstoffabnehmenden Verbrauchers weitergeleitet werden kann. Dies setzt voraus, dass die Gasabgabeseite in Form des Ringspaltes 50 des jeweiligen Filters 42 oberhalb der Oberfläche 25 des abgeschiedenen Prozesswassers liegt. Unterhalb dieses Fluidlevels 25 im Vorratstank 20 angesammeltes Prozesswasser gelangt hingegen über den weiteren Ausgang 68 aus dem Vorratstank 20 hinaus. Für die Abfuhr des Prozesswassers aus dem Vorratstank 20 kann ein zentraler, rechtwinkliger Entnahmestutzen 70 dienen, der bodenseitig innerhalb des Vorratstanks 20 ausmündet. Der an den Stutzen 70 angeschlossene weitere Ausgang 68 ist im Rahmen der Kreislaufführung 18 wiederum auf die Eingangsseite der Hydropumpe 22 geschaltet.

Der dahingehende Aufbau nach der Figur 4 bedingt , dass entgegen der prinzipiellen Darstellung nach der Figur 1 der jeweilige Filter 42 direkt im Vorratstank 20 angeordnet ist und der jeweilige eingangsseitige Ringstutzen 41 eines jeden Filters 42 über den zentralen Eingang 64 des Vorratstanks 20 an den Rücklauf 38 vonseiten der Koaleszenzeinrichtung 36 angeschlossen ist. Ebenso führt der weitere Ausgang 68 des Vorratstankes 20 mit dem Prozesswasser in Pfeilrichtung gesehen, wie bereits ausgeführt, auf die Eingangsseite der motorbetriebenen Hydropumpe 22 für einen erneuten Prozesswasserumlauf im Rahmen der Kreislaufführung 18 in Richtung des Kompressors 10 über die Kühleinrichtung 28 sowie die Filtereinrichtung 30 mit Bypassventil 32.

Dergestalt erhält die Verdrängermaschine in Form des Schraubenkompressors 10 von Gas abgereinigtes Prozesswasser für einen störungsfreien Verdichtungsbetrieb von Gas, wie Wasserstoffgas. Die in Figur 1 vorgestellte Versorgungsvorrichtung einschließlich der angesprochenen Filter 42 eignet sich auch für die Gasabscheidung aus anderen fluiden Prozessmedien. So lässt sich dergestalt beispielsweise Ammoniakgas aus einem zugehörigen Prozessfluid zwanglos abscheiden.

## Patentansprüche

1. Versorgungsvorrichtung zumindest bestehend aus einer Verdrängermaschine, insbesondere in Form eines Schraubenkompressors (10), die ein Gas, wie Wasserstoff, komprimiert, mit
- einem Fluid in Form von Prozesswasser, insbesondere in Form von deionisiertem Wasser,
- einer Kreislaufführung (18), die einen Vorratstank (20) und eine Hydropumpe (22) aufweist, die das Prozesswasser aus dem Vorratstank (20) entnimmt und im Zulauf (34) einer Niederdruckseite der Verdrängermaschine zwecks Versorgen derselben mit dem Prozesswasser zuführt, und
- einer Gasabscheideeinrichtung (40), die das auf der Hochdruckseite der Verdrängermaschine entnommene Prozesswasser vom Gas trennt.

2. Versorgungsvorrichtung nach Anspruch 1, **dadurch gekennzeichnet, dass** im Zulauf (34) zur Verdrängermaschine, die einen ein- oder mehrstufigen Verdichtungsprozess erlaubt, ausgehend von der Druckversorgungseinrichtung (22) in Folge eine Kühleinrichtung (28) und eine Filtereinrichtung (30), insbesondere zum Abreinigen von Partikelverschmutzung aus dem Prozesswasser, in der Kreislaufführung (18) vorhanden sind.

3. Versorgungsvorrichtung nach Anspruch 1 oder 2, **dadurch gekennzeichnet, dass** im Rücklauf (38) von der Verdrängermaschine in Richtung der Gasabscheideeinrichtung (40) eine Koaleszenzeinrichtung (36) in die Kreislaufführung (18) geschaltet ist, die kleintropfiges Prozesswasser respektive Wassermoleküle, auch in Form von Kondensat, zu volumetrisch größeren Wassertropfen agglomeriert.

4. Versorgungsvorrichtung nach einem der vorstehenden Ansprüche, **dadurch gekennzeichnet, dass** die Kreislaufführung (18) für das Prozesswasser geschlossen ausgeführt ist.

5. Versorgungsvorrichtung nach einem der vorstehenden Ansprüche, **dadurch gekennzeichnet, dass** die Gasabscheideeinrichtung mindestens
- einen Entlüfter,
- einen Zentrifugal- oder Fliehkraftabscheider, vorzugsweise in Verbindung mit einem Filterelement aus Polyethylen,
- einen Gaswäscher, oder
- einen Filter (42)
aufweist.

6. Filter (42) zur Behandlung von Prozesswasser für eine Versorgungsvorrichtung nach einem der vorstehenden Ansprüche, mit einem ersten Filterelement (11) und mit einem zweiten Filterelement (13), das das erste Filterelement (11) unter Bildung eines Strömungsraumes (15) mit einem vorgebbaren radialen Abstand umfasst, wobei jedes Filterelement (11, 13) ein Filtermedium (17, 19) aufweist, das von dem Prozesswasser in einer vorgebbaren Durchströmungsrichtung durchströmbar ist, und wobei die beiden Filterelemente (11, 13) in Hintereinanderanordnung jeweils eine Entgasungsstufe ausbilden, die der Vergrößerung von Gasblasen durch Koaleszenz und dem Entfernen derselben aus dem Prozesswasser durch auftriebsbedingtes Abscheiden dient.

7. Filter (42) nach Anspruch 6, **dadurch gekennzeichnet, dass** das eine in Durchströmungsrichtung gesehen jeweils vorangehende Filtermedium (17) aus einer Tiefenfilterkerze besteht, die zur Erhöhung des Filtervolumens als hohlzylindrischer Filtermantel konzipiert ist.

8. Filter (42) nach Anspruch 7, **dadurch gekennzeichnet, dass** zur Bildung der Tiefenfilterkerze Meltblownfasern verwendet sind, die vorzugsweise auf einen fluiddurchlässigen Stützkörper (21) aufgespritzt sind, an dem der Filtermantel sich entlang seiner Innenumfangsseite abstützt.

9. Filter (42) nach Anspruch 8, **dadurch gekennzeichnet, dass** die Tiefenfilterkerze aus einem Sintermaterial aufgebaut ist.

10. Filter (42) nach einem der Ansprüche 8 oder 9, **dadurch gekennzeichnet, dass** die Filterfeinheit der aus Meltblownfasern aufgebauten Tiefenfilterkerze zwischen 10 µm und 200 µm, der Faserdurchmesser zwischen 0,1 µm bis 2000 µm, und der mittlere durchflusswirksame Porendurchmesser zwischen 1 µm bis 2000 µm liegt.

11. Filter (42) nach einem der Ansprüche 6 bis 10, **dadurch gekennzeichnet, dass** für einen sortenreinen Aufbau alle eingesetzten Komponenten des Filters (42), wie Filtermedien (17, 19), Endkappen (27, 29) und Stützkörper (21, 23) aus ein- und demselben Kunststoffmaterial bestehen, vorzugsweise aus Polypropylen.

12. Verwenden einer Versorgungsvorrichtung nach einem der Patentansprüche 1 bis 5 nebst einem Filter 42 mit den Merkmalen der Patentansprüche 6 bis 11 zwecks Separieren von eingetragenem Gas aus einem Prozesswasser um das Tankvolumen eines Vorratstanks (20) zu verringern, in dem das Prozesswasser zeitweise bevorratet einem Zulauf (34) einer Verdrängermaschine, wie eines Schraubenkompressors (10), im Rahmen des Durchführens einer Wasserstoffverdichtung zugeführt wird.
